# EUROPEAN PATENT APPLICATION

(11) **EP 1 280 061 A2**
(43) Date of publication of application: **29.01.2003**
(21) Application number: 01130918.4
(22) Date of filing: 27.12.2001
(51) Int. Cl.: G06F 11/36

(54) **Apparatus and method for cross development via wireless communication**

(30) Priority: 25.07.2001 KR 2001044942
(71) Applicant: Electronics and Telecommunications Research Institute, Taejon 305-350 (KR)
(72) Inventor: Kim, Sung Hun, Taejon (KR); Kim, Myung Gyu, Taejon (KR); Kim, Ji Eun, Kwangju (KR); Park, Jun Seok, Taejon (KR); Han, Dong Won, Taejon (KR); Kim, Chae Kyu, Taejon (KR)
(74) Representative: Betten & Resch

(57) **Abstract**

The invention relates to a cross development system of a program in a target board used for an embedded system. The cross development system comprises: a cross development processing block for compiling a written application program for a microprocessor of the target board and executing debugging about execution results of the program; the first BT module for wirelessly transmitting information for executing cross development from the cross development processing block to the target board; the second BT module for receiving wireless information transmitted from the first BT module and wirelessly transmitting internal program processing results to the first BT module; a communication channel controlling block for judging whether the microprocessor of the target board is occupiable and allocating a communication channel to the host computer to transmit/receive and execute wireless information for cross development received via the second BT module. The host computer can wirelessly execute cross development such as remote debugging using the BT modules regardless the position of the target board. The local communication without the Internet network provides communication security.

## Description

### BACKGROUND OF THE INVENTION

### 1. Field of the Invention

The present invention relates to a system and method for cross development in use for development of embedded systems.

### 2. Description of the Related Art

Lately, various information instruments have come to directly access to the Internet as well as computers due to explosive growth of the Internet. For example, home electronics such as refrigerator, microwave ovens and the like, along with telephones, televisions and Personal Digital Assistants (PDAs), came to execute various functions via the Internet access. Such instruments are called embedded systems since various functions embedded therein are executed via the Internet access.

An embedded system executes various real time application programs with an embedded microcontroller. According to the development of related programs and the sophistication of the application programs, the embedded systems have drastically developed over the past. In other words, a high-level language such as the C language is generally used in writing the application programs executed in the micro-controller of the embedded system, rather than the conventional assembly language.

Meanwhile, since the device such as the target board has limited resources such as a memory or a disk, the programs written in such a high-level language cannot be executed in this state. Therefore, a general cross development method is carried out as follows: the host computer writes an application program, which the microcontroller of the embedded system will execute, using the high-level language such as the C language, compiles the application program into the assembly language executable in the microcontroller of the target board, transmits the compiled application program to the target board; and the target board stores and executes the application program, inspects execution of the program, and debugs errors.

In the cross development method, the host computer writes the application program using the high-level language, produces execution codes for the target board from the written program using a cross compiler, and then executes remote debugging via a communication link.

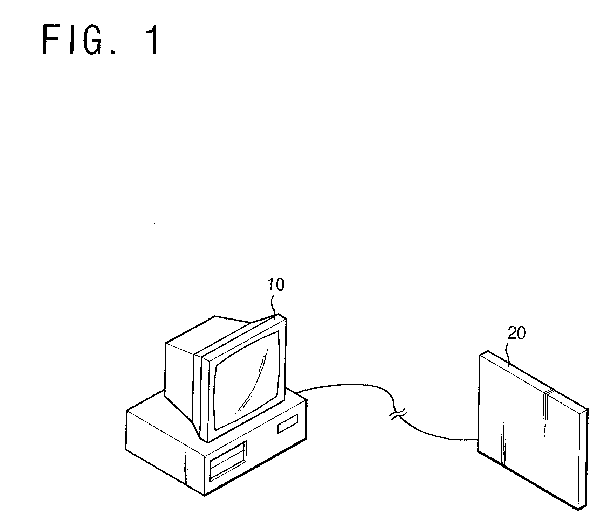

Fig. 1 is a block diagram of a general method for cross development.

As shown in Fig. 1, a host computer 10 executes remote debugging, e.g., compiles application programs written in a high-level language by using a cross compiler, and transmits/receives necessary commands, information and programs to/from a target board 20.

The target board 20 is loaded with a CPU, I/O devices, a memory, peripheral devices and the like, and connected to the host computer for acting as a development board for an embedded system, i.e., actually executing an application program while exchanging necessary information with the host computer.

The host computer 10 and the target board 20 are connected via a communication link. Examples of conventional communication links include wire links such as the RS-232C, the LAN, the USB and the like.

Cross development methods currently in use for the embedded systems include: methods for connecting between a host computer and a target board with a serial device such as an RS-232C; methods for connecting a network device to use the TCP/IP protocol; methods for connecting a serial device of a host computer to a Joint Test Access Group (JTAG) port of a target board.

The conventional methods set forth above have the following problems: The host computer and the target board are always connected via the wire link, so that the host computer and the target board have restrictions in the distance and position; The serial device or the JTAG port slows a transmission rate; The target board and the host computer are always one-to-one connected incurring an operator to use his/her own target board, so that a plurality of target boards are necessary when a plurality of operators carry out cross development.

Further, in order to use the network devices, the host computer and the target board are independently provided with the network devices. When the network devices are connected to a network such as the LAN, an external user can access to the target board resulting in a security problem.

### SUMMARY OF THE INVENTION

Accordingly, the present invention has been devised to solve the foregoing problems and it is therefore an object of the invention to provide a system and method for cross development via wireless communication in development of an embedded system, by which a host computer and a target board are wirelessly connected to execute debugging.

According to the present invention to obtain the foregoing object, the cross development of the embedded system is executed as follows: the host computer and the target board are wirelessly connected using the Bluetooth technology, which is growing as the global standard of a local wireless data communication; and programs are downloaded or necessary information is exchanged.

For the purpose of executing cross development as set forth above, an embodiment of the invention comprises: a Bluetooth (BT) module connected to a conventional I/O device such as the USB, the PC card and the RS-232C or internal BT modules such as a Bluetooth Accelerator (BTA) as hardwares; and a Bluetooth protocol stack and a profile thereof as softwares, in which the Bluetooth protocol stack and the profile are realized inside a device driver, an application program, a kernel and the like of the host computer and inside a boot loader, a monitor program, a stub and the like of the target board.

### BRIEF DESCRIPTION OF THE DRAWINGS

Fig. 1 is a schematic block diagram of a general method for cross development;
Fig. 2 is a block diagram of a system for cross development using a Bluetooth module according to an embodiment of the invention;
Fig. 3 is a block diagram of a system for cross development using BTA according to an alternative embodiment of the invention;
Fig. 4 is an overall block diagram of a system for cross development using a Bluetooth module according the alternative embodiment of the invention;
Fig. 5 is a flow chart for showing operations in a target board according to the invention;
Fig. 6 is a flow chart for showing operations in a host computer according to the invention;
Fig. 7 are block diagrams of Bluetooth protocol stacks according to the invention; and
Fig. 8 shows an overall operation flow of cross development according to the invention.

### DETAILED DESCRIPTION OF THE PREFERRED EMBODIMENT

The following detailed description will present preferred embodiments of the invention in reference with the accompanying drawings.

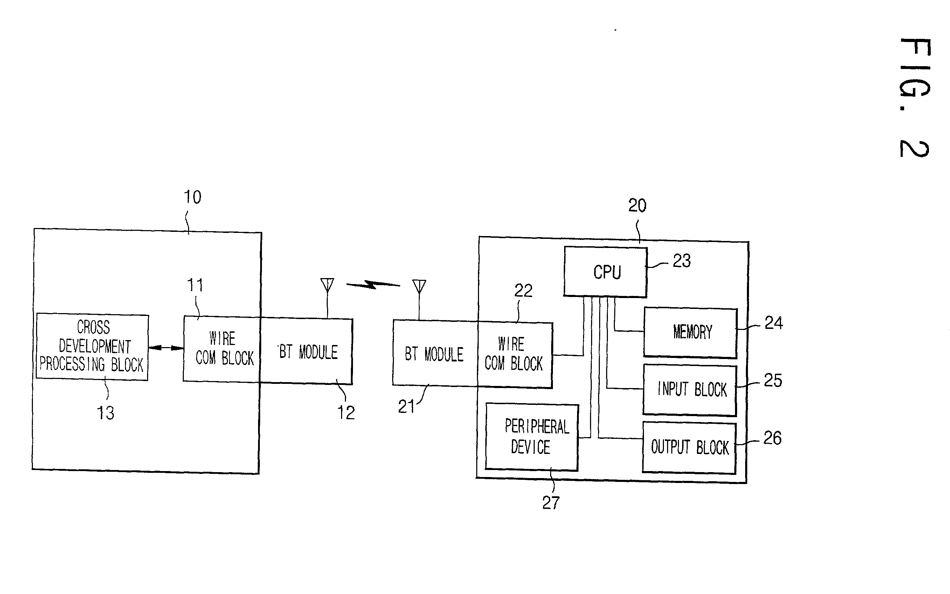

Fig. 2 is a block diagram of a system for cross development using a Bluetooth module according to an embodiment of the invention.

As shown in Fig. 2, a host computer 10 comprises a wire communication block 11 as an I/O device, a Bluetooth (BT) module 12 for being connected to the wire communication block 11 for executing wireless communication and a cross development processing block 13 for compiling a written application program to be executed in a target board and debugging according to execution results of the program.

The target board 20 has a BT module 21 for executing local wireless communication with the BT module 12 of the host computer 10. The BT module 21 is loaded on the wire communication block 22 as an I/O device of the target board 20. In the drawing, the reference numeral 23 indicates a CPU of the target board 20, 24 indicates a memory, 25 indicates an input block, 26 indicates an output block, and 27 indicates at least one peripheral device.

The wire communication block 11 of the host computer 10 and the wire communication block 22 of the target board 20 each can be constituted of a device such as the RS-232C, the USB and the PC card. The BT modules 12 and 21 are respectively connected to the wire communication blocks 11 and 22.

The BT module 12 is connected to the wire communication block 11, which is selected from the wire communication block 11 of the host computer 10 is constituted of one of the RS-232C, the USB and the PC card, and acts a function for converting wire communication into local wireless communication. The BT module 12 also receives information about the program execution results from the target board 20 via the wireless communication.

The cross development-processing block 13 acts functions for compiling the application program, which is written in a high-level language such as the C language, into an assembly language adequate to the CPU 23 of the target board 20. The cross development-processing block 13 also executes debugging according to the program execution results upon user input.

Further, the cross development processing block 13 transmits a signal, which requests the target board 20 to allocate a communication channel if the microprocessor is currently occupiable, toward the target board 20 to execute cross development of the microprocessor provided in the target board 20, and executes a cross development procedure according to allocation.

The CPU 23 of the target board 20 receives the communication channel allocation-request signal transmitted from the host computer 10, and then judges if the wireless communication can be approved in the current condition of the CPU 23. If the wireless communication is approvable, the CPU 23 transmits a message allowing wireless access.

The memory 26 is a space for storing and actually executing the application program downloaded from the host computer via a communication link. The input block 25, the output block 26 and the peripheral device(s) 27 are used for the operation of the target board 20 after completed in the target board 20.

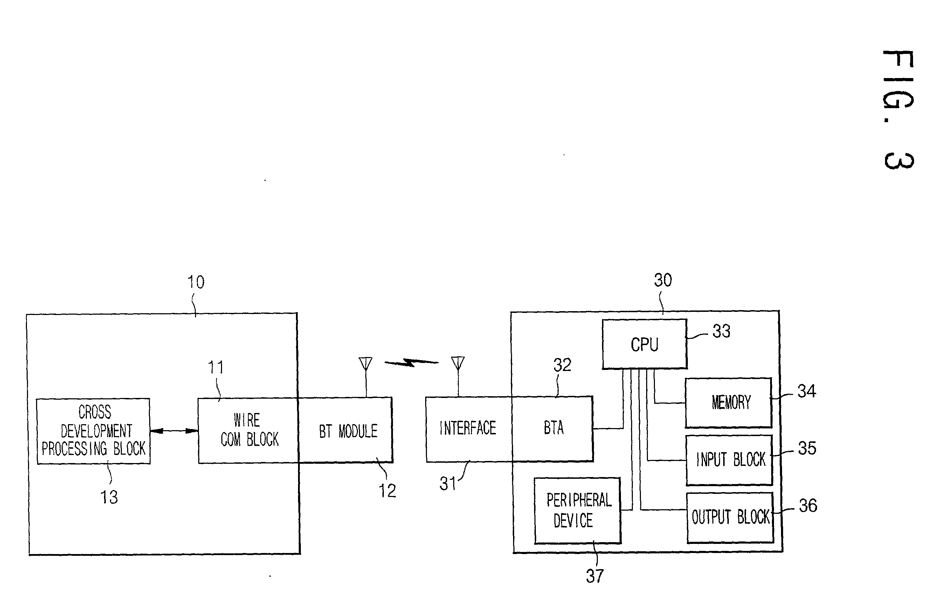

Fig. 3 is a block diagram of a system for cross development using BTA according to an alternative embodiment of the invention.

As shown in Fig. 3, a BT module 12 for executing wireless communication is loaded on a wire communication block 11 as an I/O device of a host computer. The wire communication block 11 can be constituted of one of the RS-232C, the USB, the PC card and the like. The BT module 12 is connected to one of such wire communication blocks 11 and 22.

A BTA 32 is connected to a CPU 33 of a target board directly or via an External Interface Module (EIM). An interface module 31 for connecting an antenna is connected to the BTA 32, and accordingly cross development is executed via the wireless communication.

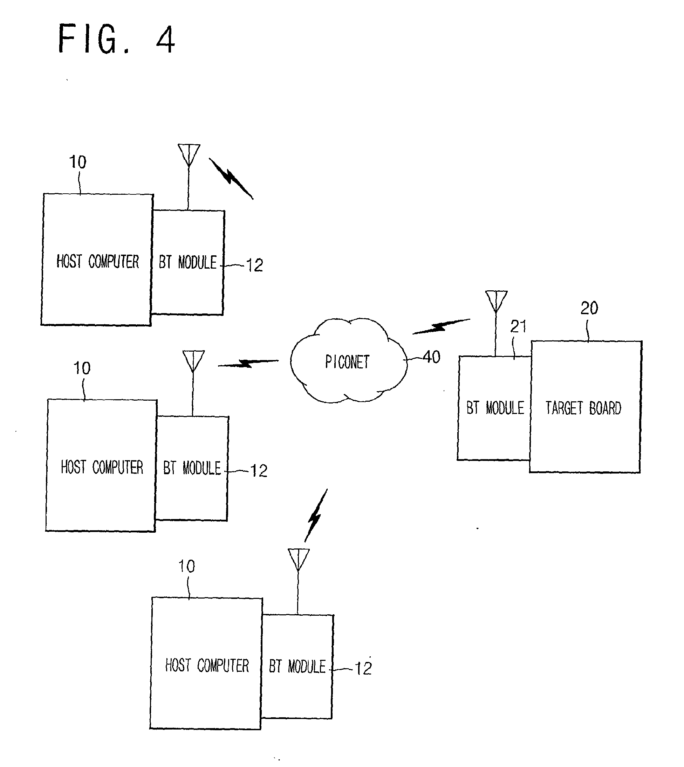

Fig. 4 is a block diagram of a system for cross development using a Bluetooth module according the alternative embodiment of the invention.

Bluetooth modules 12 are respectively loaded on one target board 20 and the maximum seven host computers 10, and the target board 20 and the plurality of host computers 10 are wirelessly connected with a Piconet 40 of the Bluetooth to execute cross development.

The Piconet means any network that executes the wireless communication with the loaded Bluetooth, and can be comprised of the maximum eight Bluetooth loaded systems including one master system and the remaining slave systems.

In other words, the target board 20 judges whether its own microprocessor is occupiable, and then allocates a communication channel to one of the host computers 10 so as to transmit/receive and execute such wireless information for cross development which was received via the BT module.

When the communication channel is allocated from the target board 20, the host computer 10 occupies the CPU 23 of the target board 20, downloads a wanted program, executes the program in the CPU 23 of the target board 20, receives results of execution thereof, and remotely executes a debugging operation about the execution results.

When one host computer 10 occupies the target board 20 executing the cross development operation, the other host computers standby until the target board 20 is deallocated.

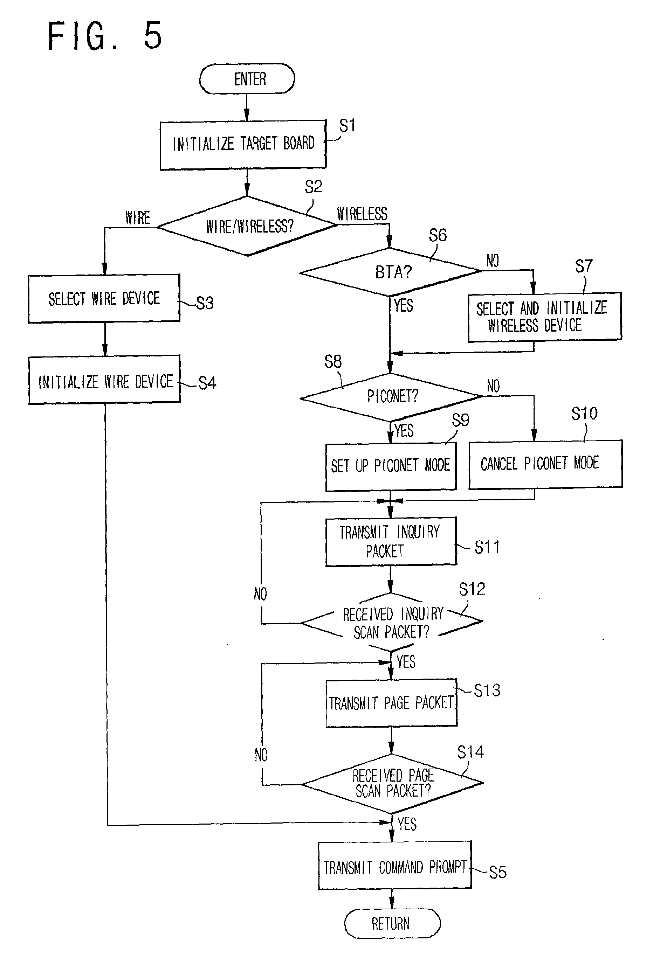

Fig. 5 is a flow chart for schematically showing operations in a target board according to the invention. Steps shown in the flow chart are realized with a boot loader of a target board, a monitor program, a stub and the like.

First, the target board is powered on to initialize the CPU 23 and the peripheral device(s) in S1. The target board determines whether to execute cross development via the wire communication block such as the RS-232C, the USB, the LAN and the JTAG or via the wireless communication with the Bluetooth in S2. When the wire communication is selected, the target board selects the type of the wire communication interfaces installed in the target board in S3. In other words, one interface is selected from the wire interfaces such as the RS-232C, the USB and the LAN. After initializing the selected wire device in S4, a prompt for receiving commands is transmitted toward the host computer via the wire interface in S5.

When cross development is wirelessly executed via the Bluetooth, the target board inspects whether the BTA exists in the target board. In the absence of the BTA, it is necessary to connect a Bluetooth module to the previous wire I/O device such as the RS-232C and the USB. Therefore, the target board selects a wire device which is connected with the Bluetooth module, and initializes the selected wire device in S7. The Bluetooth divides time slots in executing communication, allowing the maximum eight BT modules to communicate at the same time in a network so-called the Piconet. Further, the Bluetooth can carry out one-to-one communication by using only one time slot without sending the inquiry packet to the remaining time slots. Accordingly, the target board judges whether the Piconet mode be set up in S8. In the basis of a judged result, the Piconet mode is set up in response to an input signal of a user in S9, or the Piconet mode is canceled in S10.

If necessary parameters such as environmental parameters are determined, the target board continuously transmits an inquiry packet to search for a BT module of the host computer, if any, in the neighborhood of the target board in S11. When the BT module, if any, in the neighboring host computer receives the inquiry packet and transmits an inquiry scan packet corresponding to the inquiry packet, the target board receives the inquiry scan packet in S12.

The target board 20 interprets the received inquiry scan packet to find the BT module in the corresponding host computer, and transmits a page packet to connect with the corresponding BT module in S13. After receiving the page packet, the BT module of the host computer 10 transmits a page scan packet corresponding to the page packet.

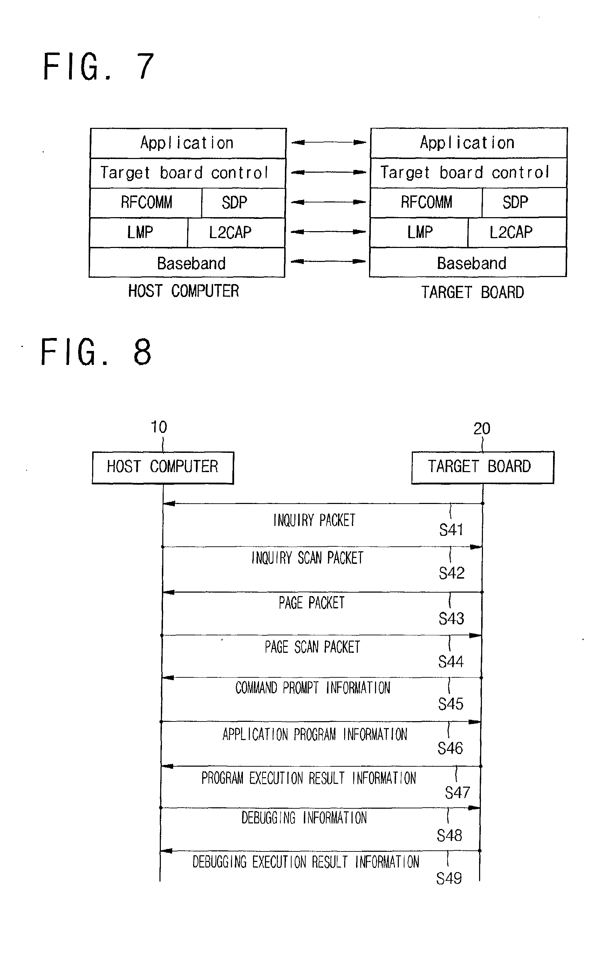

After transmitting the page packet, the target board 20 judges whether the page scan packet, which the BT module of the host computer transmits corresponding to the page packet, is received. When the page scan is received, connection is made between the BT modules of the target board and the host computer, and the target board wirelessly transmits the prompt for receiving commands toward the host computer via a Bluetooth stack such as the HCI and the L2CAP shown in Fig. 7 in S5.

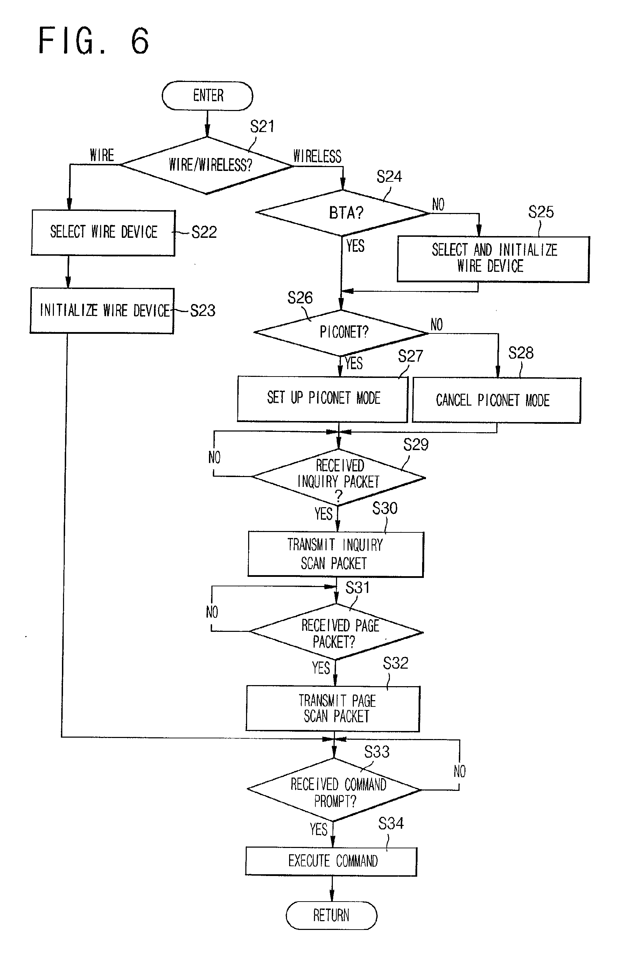

Fig. 6 is a flow chart for schematically showing operations in a host computer according to the invention.

The operations in the flow chart are realized in the OS, application programs, device drivers and the like of the host computer.

The host computer determines that cross development be executed via the wire communication block 11 such as the RS-232C, the USB and the LAN or via wireless communication with Bluetooth in S21.

When the wire communication is selected, the host computer selects one wire communication block 11 from the wire interfaces such as the RS-232C, the USB and the LAN in S22, and initializes the corresponding wire device selected for executing a cross development operation mode in S23. The host computer receives a command prompt transmitted from the target board in S33, and then executes cross development with the target board using predetermined commands in S34.

When cross development is wirelessly executed via the Bluetooth, the host computer judges whether the BTA exists therein in S24. If the BTA exists, the wireless communication is executed accordingly. In the absence of the BTA, it is required to connect the BT module to the wire I/O device such as the RS-232C and the USB. Therefore, the host computer selects a wire device connected to the BT module, and initializes the corresponding wire communication block 11 in S25.

The Bluetooth divides time slots in executing communication, allowing the maximum eight BT modules to communicate at the same time in a network so-called the Piconet. Further, the Bluetooth can carry out one-to-one communication by using only one time slot without sending the inquiry packet to the remaining time slots.

Therefore, the host computer judges whether to use the Piconet mode in S26. In response to an input signal of the user, the host computer sets up the Piconet mode in S27, or cancels the Piconet mode in S28.

If the necessary parameters such as the environmental parameters are determined as set forth above, the host computer judges whether an inquiry packet is being received, in order to know whether the BT module in a neighboring target board searches for another BT module, in S29.

If the inquiry packet is received from the BT module of the target board 20, the host computer transmits an inquiry scan packet corresponding thereto in S30. Accordingly, the target board and the host computer each recognize the BT modules of each other.

When the host computer 10 transmits the inquiry scan packet as set forth above, the target board 20 as the master in the Piconet transmits a page packet corresponding to the inquiry scan packet toward the host computer 10, in order to connect the BT module of the host computer with the BT module of the host computer 10.

After transmitting the inquiry scan packet, the host computer 10 as the slave judges whether the page packet is received from the target board 20 in S31. When the page packet is received, the host computer transmits a page scan packet corresponding to the page packet toward the target board 20. In such a manner, connection is made between the BT modules of the host computer 10 and the target board 20.

When the BT modules are connected as set forth above, the host computer 10 receives the command prompt transmitted from the target board 20, and then executes cross development together with the target board using the predetermined commands. The commands transmitted/received between the host computer 10 and the target board 20 for cross development are wirelessly transmitted via the Bluetooth stack such as the HCI and the L2CAP shown in Fig. 7.

In the embodiment described in reference to the flow charts shown in Figs. 5 and 6, the target board 20 is set up as the master and the host computers 10 are set up as the slaves.

Alternatively, the network can be so provided that the target board 20 is set up as the slave and one of the host computers 10 is set up as the master, in which the role of the target board 20 is changed into the master and the role of the host computer 10 as the master is changed into the slave using a command for role change in the Bluetooth.

When the target board 20 is role changed into the master, the maximum seven host computers can be connected to the target board 20 as the slaves.

Fig. 7 shows example profiles of Bluetooth protocol stacks for executing cross development using the Bluetooth, in which the Bluetooth protocol stacks such as the HCI, the L2CAP and the RFCOMM and the profiles thereof are respectively realized inside the device drivers, the application program, the kernel and the like of the host computer 10 as well as the boot loader, the monitor program, the sub and the like of the target board 20.

Referring to the constitution, a target board control is layered on the each Bluetooth protocol stack including a baseband, an LMP/L2CAP, an RFCOMM/SDP and the like for cross development between the target board and the host computer, and thus cross development is executed based upon such protocols.

Fig. 8 shows an overall operation flows of executing cross development using the host computer and the target board as set forth above.

First, the host computer 10 prepares for executing cross development in the following steps of: loading and executing a program for cross development; inspecting which device is set up for the embedded wire communication block 11; and setting up an environment of the BT module 12 for executing wireless communication according to the inspection.

Meanwhile, the target board 20 executes the initialization for cross development when powered on, and transmits the inquiry packet for informing its existence to the BT module of the neighboring host computer 10 when the necessary environmental parameters are determined in S41.

The host computer 10 is required to inform the target board 20 that it intends to occupy the target board for executing the cross development. Accordingly, the host computer transmits the request message that it intends to occupy the microprocessor of the target board 20 for executing cross development to the target board 20 which transmitted the inquiry packet. This request message is the scan packet.

The target board 20 can receive such inquiry scan packet in plural from several host computers 10. The target board 20 interprets the inquiry scan packet to find the BT module of the corresponding host computer, and searches for a cross development operation, if any, currently executed in its own microprocessor. In the absence of the executed cross development operation, the target board 20 transmits the page packet to approve that the corresponding host computer 10 may occupy the microprocessor of the target board 20 in use and to connect with the BT module of the corresponding host computer 10 in S43. After receiving the page packet, the BT module of the host computer 10 transmits the page scan packet to set up a corresponding connection in S44.

When the target board 20 receives the page scan packet, the two BT modules of the target board and the host computer are connected. The target board 20 transmits the prompt for receiving the commands toward the host computer 10, in order to execute cross development, in S45.

The host computer 10 wirelessly transmits application program information to the target board 20 via the BT module in S46. The application program information is compiled in such a form adequate for the target board 20 to execute the information. The target board 20 interprets the application program information to execute the program according to the information. In order to debug the program execution results, the target board 20 wirelessly transmits information about the program execution results to the host computer 10 via the BT module in S47.

The host computer 10 displays the program execution results in the target board 20 to the user, and executes debugging about the program execution results in response to an input signal of the user. Information about the debugging is transmitted to the target board in S48.

The target board 20 interprets the debugging information after wireless receiving, and executes a program according to the interpretation. Information about debugging results is wirelessly transmitted from the target board 20 to the host computer 10 via the BT module in S49.

In execution of cross development, the system for cross development in accordance with the invention can provide the following effects:
First, the distance between the each host computer and the target board can be prolonged up to 10m. Cross development such as remote debugging can be wirelessly executed regardless of the position of the target board. Communication security can be enhanced since the Bluetooth is a local communication without the Internet network.
Second, information can be exchanged in a relatively high transmission rate up to 1Mbps.
Third, when the Bluetooth Piconet is used, one target board is connected with the host computers up to 7, so that several users can use one target board at the same time.
Finally, the BT module is directly connected to the USB, the PC card and the RS-232C, the previous target board and the host computer can be used without any change in the hardware.

## Claims

1. A method for cross development via wireless communication in a host computer which communicates with a target board having a microprocessor to execute cross development to a program of the microprocessor, the method comprising the following steps of:
requesting a permission to occupy the microprocessor from the target board via a wireless network;
if a message allowing occupancy of the microprocessor is received from the target board in response to the request, transmitting information for cross development to the target board via the wireless network; and
receiving program execution result information from the target board in response to the cross development information to execute a remote debugging about the program execution results.

2. A method for cross development via wireless communication in accordance with claim 1, wherein the wireless network is a Bluetooth network.

3. A method for cross development via wireless communication in accordance with claim 2, wherein the Bluetooth network is a Piconet network of the Bluetooth.

4. A method for cross development via wireless communication in a target board which has an embedded microprocessor and communicates with at least one host computer to execute cross development to a program of the microprocessor, the method comprising the following steps of:
receiving a signal requesting a permission to occupy the microprocessor from the target board via a wireless network;
judging whether the microprocessor is occupiable in response to the signal, and if the microprocessor is occupiable, transmitting an occupancy-permitting message to the host computer which requested the permission;
receiving information transmitted from the host computer for executing cross development via the wireless network, in response to the occupancy-permitting message; and
executing the program according to the information for cross development and transmitting execution result information to the host computer via the wireless network for remote debugging about execution results.

5. A method for cross development via wireless communication in accordance with claim 4, wherein the wireless network is a Bluetooth network.

6. A method for cross development via wireless communication in accordance with claim 5, wherein the Bluetooth network is a Piconet network of the Bluetooth.

7. A system for cross development via wireless communication which communicates with a target board having a microprocessor to execute cross development to a program of the microprocessor, the system comprising:
means for requesting a permission to occupy the microprocessor from the target board and judging whether the microprocessor is occupiable in response to a signal transmitted from the target board in response to the request;
means for wirelessly communicating information for cross development with the target board, if the microprocessor is occupiable; and
means for executing remote debugging in response to program execution result information received from the target board.

8. A system for cross development via wireless communication in accordance with claim 7, wherein the communicating means is a BT module.

9. A cross development system of a target board via wireless communication which communicates with at least one host computer to execute cross development to a program of a microprocessor embedded in the target board, the system comprising:
means for judging whether the microprocessor is occupiable in response to an occupancy-request signal about the microprocessor received from the host computer;
means for wirelessly communicating information for executing cross development with the host computer, which sent the occupancy-request signal, if the microprocessor is occupiable; and
means for executing a corresponding program in response to the received information to execute cross development.

10. A cross development system of a target board via wireless communication in accordance with claim 9, wherein the wirelessly communicating means is a Bluetooth network.

11. A data transceiver system for executing program cross development of a target board using at least one host computer, comprising:
a first wireless communication block loaded on the host computer for wirelessly transmitting first information for cross development of the target board to the target board and receiving second information corresponding to the first information from the target board; and
a second wireless communication block loaded on the target board for sending third information about application program and debugging execution transmitted from the host computer to the target board and sending execution results to the first wireless communication block.

12. A data transceiver system for executing program cross development of a target board in accordance with claim 11, wherein the informations contain at least one of a group including a compiled application program information, a microprocessor occupancy-request signal information and a program debugging information.

13. A data transceiver system for executing program cross development of a target board in accordance with claim 11, wherein the first and second wireless communication blocks are BT modules.

14. A data transceiver system for executing program cross development of a target board in accordance with claim 11, wherein the first wireless communication block or the second wireless communication block includes a BTA.
